# EUROPEAN PATENT APPLICATION

(11) **EP 2 105 784 A1**
(43) Date of publication of application: **30.09.2009**
(21) Application number: 09154727.3
(22) Date of filing: 10.03.2009
(51) Int. Cl.: G02F 1/1333, G02F 1/1337

(54) **Liquid crystal panel, display, and projector**

(30) Priority: 25.03.2008 JP 2008077855
(71) Applicant: Nikon Corporation, Chiyoda-ku Tokyo 100-8331 (JP)
(72) Inventor: Fujinawa, Nobuhiro, Chiyoda-ku Tokyo 100-8331 (JP); Koishi, Hiroyuki, Chiyoda-ku Tokyo 100-8331 (JP)
(74) Representative: Walaski, Jan Filip

(57) **Abstract**

A liquid crystal panel including a plurality of rectangular pixels in parallel, the liquid crystal panel includes: a liquid crystal containing liquid crystal molecules; a color filter that transmits a light having a predetermined color from among lights that have been transmitted through the liquid crystal; a plurality of pixel electrodes that applies electric fields to the liquid crystal; a common electrode opposite to the plurality of the pixel electrodes through the liquid crystal; a first rubbing means for aligning the liquid crystal molecules in a first direction at an interface of the liquid crystal on the side of the pixel electrode; and a second rubbing means for aligning the liquid crystal molecules in a second direction at an interface of the liquid crystal on the side of the common electrode, wherein the first direction is a shorter direction of the rectangular pixel.

## Description

The disclosure of the following priority application is herein incorporated by reference:

Japanese Patent Application No.2008-077855 filed March 25, 2008.

The present invention relates to a liquid crystal panel, a display, and a projector.

Japanese Laid-open Patent Publication No. 06-118447 discloses an active matrix type liquid crystal panel that includes a common electrode provided with a slit along the direction of a signal line in order to prevent crosstalk by the signal line.

Miniaturization of pixels (or a decrease in pixel size) makes it necessary to suppress influences of crosstalk by pixel electrodes as well as crosstalk by signal lines.

According to the 1st aspect of the present invention, a liquid crystal panel including a plurality of rectangular pixels in parallel, the liquid crystal panel comprises: a liquid crystal containing liquid crystal molecules; a color filter that transmits a light having a predetermined color from among lights that have been transmitted through the liquid crystal; a plurality of pixel electrodes that applies electric fields to the liquid crystal; a common electrode opposite to the plurality of the pixel electrodes through the liquid crystal; a first rubbing means for aligning the liquid crystal molecules in a first direction at an interface of the liquid crystal on the side of the pixel electrode; and a second rubbing means for aligning the liquid crystal molecules in a second direction at an interface of the liquid crystal on the side of the common electrode, wherein the first direction is a shorter direction of the rectangular pixel.

According to the 2nd aspect of the present invention, in the liquid crystal panel according to the 1st aspect, it is preferred that the common electrode includes an electric field control means for controlling an influence of an electric field generated by a first pixel electrode having accumulated charges therein among the pixel electrodes on the liquid crystal molecules arranged on the side of the common electrode among the liquid crystal molecules corresponding to a second pixel electrode adjacent to the first pixel electrode.

According to the 3rd aspect of the present invention, a liquid crystal panel including a plurality of rectangular pixels arranged in parallel therein, the liquid crystal panel comprises: a liquid crystal containing liquid crystal molecules; a color filter that transmits a light having a predetermined color from among lights transmitted through the liquid crystal; a plurality of pixel electrodes each of which applies an electric field to the liquid crystal; and a common electrode facing the plurality of pixel electrodes via the liquid crystal, wherein the common electrode includes an electric field control means for controlling an influence of an electric field generated by a first pixel electrode having accumulated charges therein from among the pixel electrodes on the liquid crystal molecules arranged on the side of the common electrode among the liquid crystal molecules corresponding to a second pixel electrode adj acent to the first pixel electrode.

According to the 4th aspect of the present invention, in the liquid crystal panel according to the 2nd or 3rd aspects, it is preferred that the electric field control means is constituted by a slit-like non-conductive part formed on the common electrode along apart of a longer side of the rectangular pixel.

According to the 5th aspect of the present invention, in the liquid crystal panel according to the 2nd or 3rd aspects, it is preferred that the electric field control means includes a transparent insulation layer formed on the common electrode along a part of a longer side of the rectangular pixel.

According to the 6th aspect of the present invention, a display device comprises a liquid crystal panel according to any one of the 1st through 5th aspects.

According to the 7th aspect of the present invention, a projector comprises a liquid crystal panel according to any one of the 1st through 5th aspect.

### BRIEF DESCRIPTION OF THE DRAWINGS

FIG. 1 is a diagram for illustrating the structure of the liquid crystal panel according to a first embodiment of the present invention;
FIGS. 2A to 2C each are diagrams for illustrating the direction of rubbing of an alignment film according to the first embodiment of the present invention, with FIG. 2A showing an example of arrangement of the color filters in the liquid crystal panel, FIG. 2B showing the direction of rubbing of the alignment film on the filter side, and FIG. 2C showing the direction of rubbing on the pixel electrode side;
FIG. 3 is a diagram for illustrating the electric field in a liquid crystal according to the first embodiment of the present invention;
FIG. 4A is a diagram for illustrating the arrangement of the liquid crystal molecules according to the first embodiment of the present invention and FIG. 4B is a diagram for illustrating the state of light that is transmitted through a G filter;
FIGS. 5A to 5C each are a diagram for illustrating the direction of rubbing of the alignment film of a comparative example relative to the first embodiment of the present invention, with FIG. 5A showing the arrangement of a color filter in a liquid crystal panel, FIG. 5B showing the direction of rubbing of the alignment film on the color filter side, and FIG. 5C showing the direction of rubbing of the alignment film on the pixel electrode side;
FIG. 6A is a diagram for illustrating the arrangement of the liquid crystal molecules of the comparative example relative to the first embodiment of the present invention, and FIG. 6B is a diagram for illustrating the state of light that passes the G filter;
FIG. 7A is a diagram showing an example of the arrangement of color filters in a liquid crystal panel, FIG. 7B is a diagram for illustrating slits formed in the common electrode according to the second embodiment of the present invention, and FIG. 7C is a diagram illustrating a part in which slits are discontinuous;
FIG. 8 is a diagram for illustrating the electric field in the liquid crystal according to the second embodiment of the present invention;
FIG. 9A is a diagram for illustrating the arrangement of the liquid crystal according to the second embodiment of the present invention, and FIG. 9B is a diagram for illustrating the state of light that transmits through the G filter;
FIG. 10 is a diagram for illustrating the common electrode according to the comparative example relative to the second embodiment of the present invention;
FIG. 11 is a diagram for illustrating the electric field in the liquid crystal according to the comparative example relative to the second embodiment of the present invention;
FIG. 12A is a diagram for illustrating liquid crystal molecules according to the comparative example relative to the second embodiment of the present invention, and FIG. 12B is a diagram for illustrating the state of light that is transmitted through the G filter;
FIG. 13A is a diagram for illustrating an example of the arrangement of color filters in the liquid crystal panel, and FIG. 13B is a diagram for illustrating a modification of the slit formed in the common electrode in the second embodiment of the present invention;
FIG. 14 is a diagram for illustrating a transparent insulation layer formed on the common electrode;
FIG. 15 is a diagram for illustrating the display device provided with the liquid crystal panel of the present invention; and
FIG. 16 is a diagram for illustrating the projector that includes the liquid crystal panel of the present invention.

### DESCRIPTION OF PREFERRED EMBODIMENTS

Hereinafter, preferred embodiments of the present invention will be explained with reference to the attached drawings.

### -FIRST EMBODIMENT-

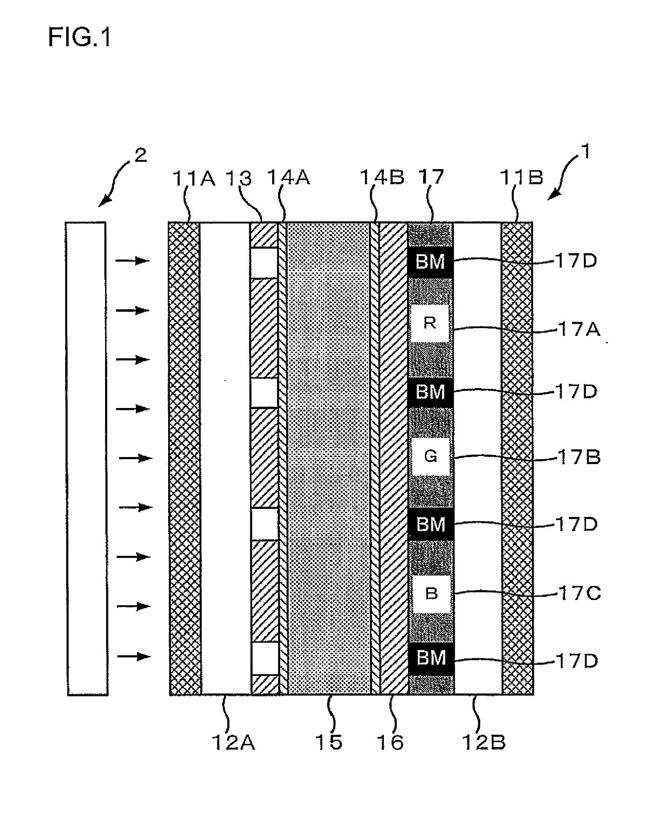

FIG. 1 is a diagram for illustrating a liquid crystal panel 1 according to a first embodiment of the present invention. The liquid crystal panel 1 according to the first embodiment of the present invention is a transmission type liquid crystal panel, which realizes its function as a display element with light irradiated from a backlight 2. The liquid crystal panel 1 is constituted by a liquid crystal TN (Twisted Nematic) type liquid crystal. In the liquid crystal panel 1, the liquid crystal molecules are arranged in a 90°-twisted fashion around an axis in the direction of irradiation of the backlight. The liquid crystal panel 1 according to the first embodiment of the present invention is a liquid crystal panel of an active matrix system that includes TFTs (Thin Film Transistors) . Each of the pixels is provided with an ON/OFF switch constituted by the TFT.

The liquid crystal panel 1 includes a polarization plate 11A, a glass substrate 12A for forming a TFT device (hereafter, 2TFT device formation glass substrate 12A"), a pixel electrode 13, an alignment film 14A, a liquid crystal 15, an alignment film 14B, a common electrode 16, a color filter 17, a glass substrate 12B, and a polarization plate 11B in order from the side of the backlight 2.

The polarization plates 11A and 11B transmit only the light that oscillates in a specified direction. The direction of oscillation of the light that is transmitted through the polarization plates 11A and 11B is called an axis of polarization, and a direction perpendicular thereto is called an axis of absorption. The polarization plates 11A and 11B are configured such that the polarization axes are perpendicular to each other. The polarization plates 11A and 11B are prepared by unidirectionary drawing a transparent film mixed with iodine and a dye. The direction of drawing corresponds to the axes of absorption of the polarization plates 11A and 11B.

The TFT device formation glass substrate 12A is a glass substrate having formed on the surface thereof a TFT device. The TFT device is formed for each pixel electrode. It is an ON/OFF switch that controls charging electric charges (pixel signals) in the pixel electrode described hereinbelow. When the TFT device is ON in a state where a voltage is applied thereto, current flows in the pixel electrode. When current flows in the pixel electrode, electric charges are accumulated in the pixel electrode and a voltage is applied to a liquid crystal 15. When the TFT device is turned OFF, the charges accumulated in the pixel electrode will not flow out from the pixel electrode. As a result, the charges accumulated in the pixel electrode are held and the voltage applied to the liquid crystal 15 is held. Thereafter, electric current flows from the pixel electrode when the TFT device is turned ON in a state where no voltage is applied. When the electric current flows from the pixel electrode, the charges accumulated in the pixel electrode are discharged, so that application of voltage to the liquid crystal 15 is cancelled.

The pixel electrode 13 is provided for each sub pixel on which description is made hereinafter. The pixel electrode 13 is a transparent electrode made of ITO (Indium Tin Oxide) or the like. It applies a voltage to the liquid crystal 15. The pixel electrode 13 is formed on the TFT device formation glass substrate 12A by plasma CVD or sputtering. A plurality of pixel electrodes 13 is arranged in parallel both horizontally and vertically. The charges supplied to the pixel electrodes 13 are controlled for every pixel electrode corresponding to the ON/OFF state of the TFT device one by one.

The alignment films 14A and 14B are films that align liquid crystal molecules in the directions of the polarization axes of the polarization plates 11A and 11B. The alignment films 14A and 14B have thicknesses of about 0.1 µm and are made of high polymers such as polyimide. The alignment films 14A and 14B are prepared by performing a rubbing treatment on the surface of the above-mentioned high polymer film. The rubbing treatment is a treatment in which the surface of a polymer film is rubbed with a cloth wound around a roller. The liquid crystal molecules in contact with the alignment films 14A and 14B at the interfaces between the liquid crystal 15 and the alignment films 14A and 14B are aligned in the direction in which they have been rubbed by the rubbing treatment.Hereafter,the direction along whichliquid crystal molecules are aligned is referred to as "rubbing direction". In this case, the direction along which the surface of the polymer film is rubbed with the cloth wound around the roller is the rubbing direction. Since the polarization plates 11A and 11B are arranged such that their polarization axes are mutually orthogonal, the rubbing directions of the polarization films 14A and 14B are also mutually orthogonal. Since the liquid crystal molecules have the property of tending to align in the same direction, the direction of alignment of liquid crystal molecules gradually changes from the rubbing direction of the alignment film 14A to the rubbing direction of the alignment film 14B. As a result, the liquid crystal molecules are aligned as twisted by 90° around the direction of irradiation of the backlight 2 as an axis.

The common electrode 16 is a transparent electrode made of ITO (indium Tin Oxide) or the like disposed opposite to the pixel electrode 13. Also, the common electrode 16 is formed by plasma CVD or sputtering. The common electrode 16 is connected to the groundpotential to generate an electric field in the liquid crystal depending on a difference in potential between the common electrode 16 and the pixel electrode 13 in which charges are accumulated.

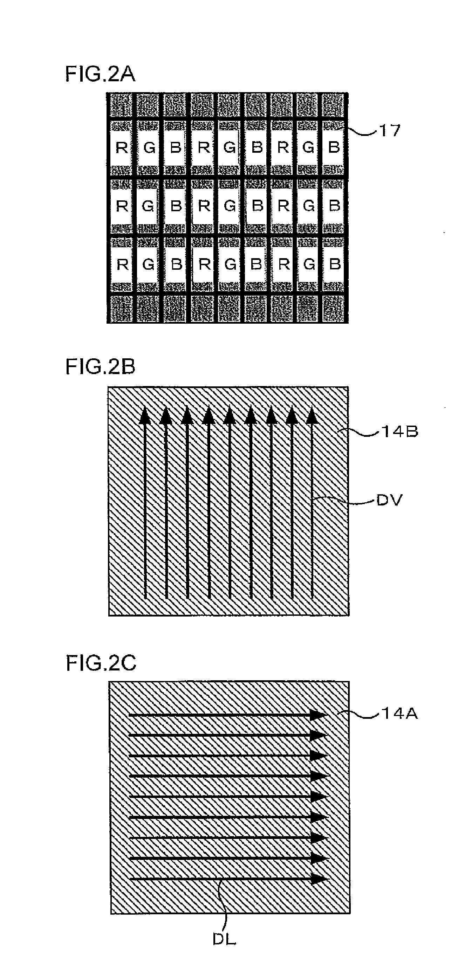

The color filter 17 includes a red (R) filter 17A that transmits only a red light, a green (G) filter that transmits only a green light, and a blue (B) filter that transmits only a blue light, out of the lights from the backlight 2, as well as a black matrix (BM) 17D that transmits no light. Each of the filters 17A to 17C is rectangular in shape (see FIG. 2A). Hereafter, the filters 17Ato 17C are referredto as rectangular filters generically. Each rectangular filter has a longer direction dimension of, for example 14.1 µm and a shorter direction dimension of, for example, 4.7 (=14.1/3) µm. The rectangular filters 17A to 17C are formed on the respective pixel electrodes 13. Each BM 17D is formed corresponding to a region between two adjacent pixel electrodes 13.

The rectangular filters 17A to 17C are arranged in parallel laterally and horizontally in a lattice-like arrangement (see FIG. 2A) , with the R filter 17A, the G filter 17B, and the B filter 17C constituting a set of filters for a single pixel. The single pixel includes the set of R filter 17A, G filter 17B, and B filter 17C, as well as the polarization plates 11A, the TFT device formation glass substrates 12A, the pixel electrodes 13, the alignment films 14A, the liquid crystals 15, the alignment films 14B, the common electrodes 16, the glass substrates 12B, and the polarization plates 11B, with these corresponding to the R filter 17A, G filter 17B, and B filter 17C, respectively. All colors can be reproduced with a single pixel by combining lights that are transmitted through the R filter 17A, the G filter 17B, and the B filter 17C, respectively, based on the principle of additive color mixing. Since each rectangular filter has the above-mentioned sizes in the longer direction and the shorter direction, the single pixel has a size of 14.1 µm x 14.1 µm.

Unit pixels that constitute a single pixel and emit red, green, and blue lights, respectively, are called sub-pixels. In other words, a single pixel is constituted by three sub-pixels. A sub-pixel includes one of the rectangular filters 17A to 17C and the polarization plate 11A, the TFT device formation glass substrate 12A, the pixel electrode 13, the alignment film 14A, the liquid crystal 15, the alignment film 14B, the common electrode 16, the glass substrate 12B, and the polarization plate 11B, with these corresponding to the above-mentioned one of the rectangular filters 17A to 17C. Therefore, the sub-pixels have each a rectangular shape. That is, one sub-pixel, like a rectangular filter, has a size of 14.1 µm in the longer direction and 4.7 (14.1/3) µm in the shorter direction. The color filter 17 is formed on the glass substrate 12B by a process of photolithography. The position at which the color filter is arranged is not limited to a side of the liquid crystal 15 where the light from the backlight 2 exits but may be on a side of the liquid crystal 15 where the light from the backlight 2 enters it.

The backlight 2, which is a light source that allows the liquid crystal panel 1 to be useful as a display device, irradiates the light to the liquid crystal panel 1.

The principle in which the liquid crystal panel 1 is made transmissive/non-transmissive to the light from the backlight 2 will be explained with reference to FIG. 1. When the pixel electrode 13 is not charged, the light from the backlight 2 is transmitted through the liquid crystal panel 1. That is, the arrangement of the molecules in the liquid crystal 15 is a 90°-twisted arrangement. Among the lights irradiated from the backlight 2, only the light that oscillates in a specified direction due to the presence of the polarization plate 11A is transmitted through the liquid crystal panel 1. The transmitted light travels through the TFT device formation glass plate 12A, the pixel electrode 13A, and the alignment film 14A. Then, the direction of oscillation of the transmitted light is rotated by 90° due to the twisted arrangement of the liquid crystal molecules in the liquid crystal 15. The transmitted light further travels through the alignment film 14B, the common electrode 16, the color filter 17, and the glass substrate 12B. The polarization axis of the polarization plate 11B is orthogonal to the polarization axis of the polarization plate 11A, so that the transmitted light whose direction of oscillation has been rotated by 90° is transmitted through the polarization plate 11B. In the above-mentioned manner, the light irradiated from the backlight 2 is transmitted though the liquid crystal panel 1.

On the other hand, when the pixel electrode 13 is charged, the light from the backlight 2 is not transmitted through the liquid crystal panel 1. That is, the arrangement of the molecules of the liquid crystal 15 is changed from the 90°-twisted arrangement to the arrangement aligned to the direction of the electric field due to the electric field generated between the pixel electrode 13 and the common electrode 16. Consequently, the oscillation direction of the transmitted light that has been transmitted through the polarization plate 11A is not rotated by 90°, so that the light will not be transmitted through the polarization plate 11B. As a result, the light irradiated from the backlight 2 is not transmitted through the liquid crystal panel 1.

As mentioned above, control of the accumulation of charges in the pixel electrode 13 enables reproduction of all the colors by a single pixel, for example, by allowing only the R filter 17A to transmit the light, by allowing only the R filter 17A and the G filter 17B to transmit the light, or the like.

Referring to FIGS. 2 to 4, the rubbing directions of the alignment films 14A and 14B in the liquid crystal panel 1 according to a first embodiment of the present invention will be described. In this embodiment, explanation is made on the case where only the G filter 17B transmits a light from the backlight 2 but the R filter 17A and the B filter 17C transmit no light. In this case, the pixel electrodes 13 facing the R filter 17A and the B filter 17C, respectively, are charged but the pixel electrode 13 facing the G filter 17B is not charged.

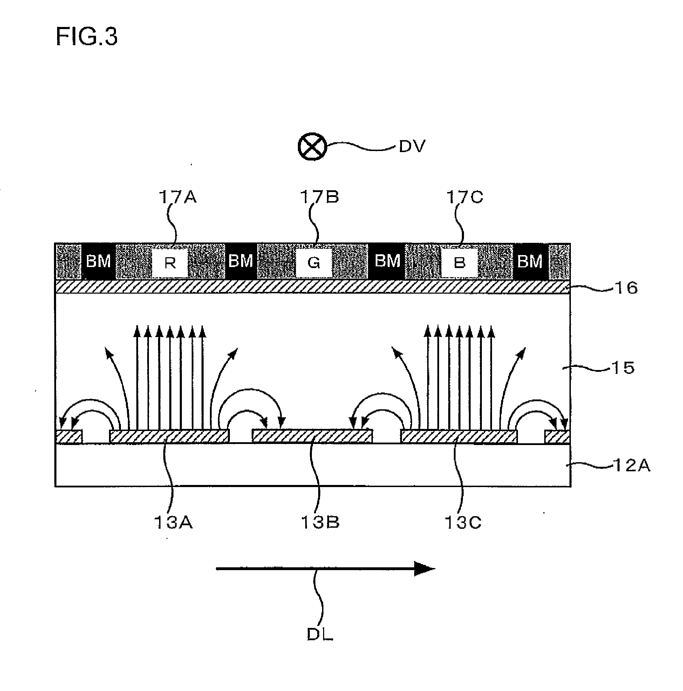

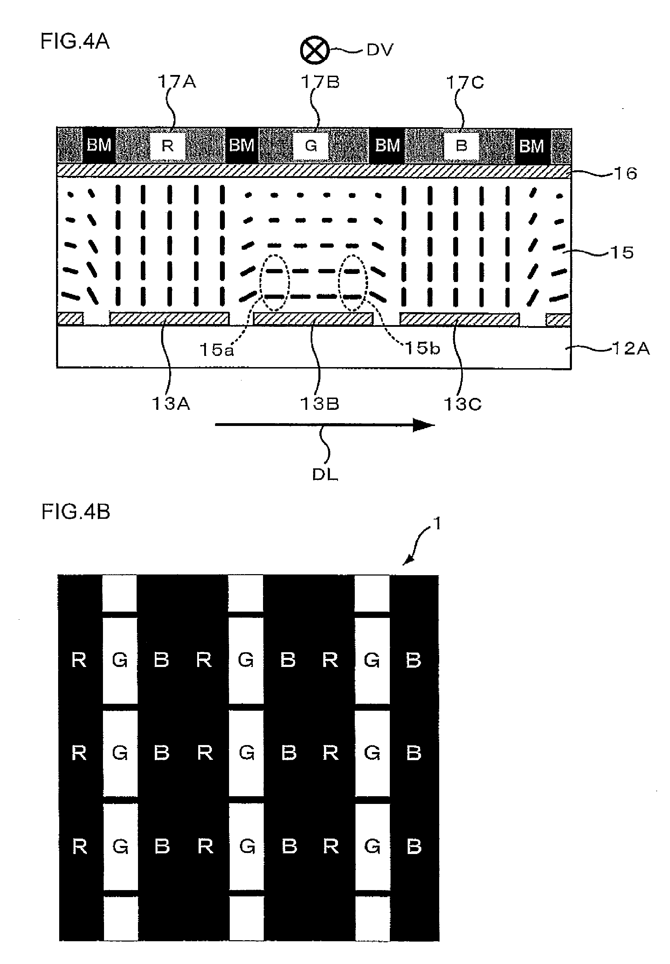

FIG. 2A schematically shows the liquid crystal panel 1 having formed therein the color filter 17 that includes rectangular filters arranged in parallel horizontally and vertically. In the liquid crystal panel 1, the rubbing direction of the alignment film 14B on the color filter 17 side is set to the longer direction of the rectangular filter as indicated by an arrow DV shown in FIG. 2B. On the other hand, in the liquid crystal panel 1, the rubbing direction of the alignment film 14A on the pixel electrode 13 side is set to the shorter direction of the rectangular filter as indicated by an arrow DL shown in FIG. 2C. FIG. 3 shows an electric field generated in the liquid crystal 15. As shown in FIG. 3, there is an electric field generated in the shorter direction DL of the rectangular filter from the pixel electrode 13A facing the R filter 17A and the pixel electrode 13C facing the B filter 17C to the pixel electrode 13B facing the G filter 17B. Hereafter, this electric field is referred to as a horizontal electric field. As shown in FIG. 4A, among the liquid crystal molecules that are present between the G filter 17B and the pixel electrode 13B, the liquid crystal molecules 15a and 15b that are disposed close to the pixel electrode 13A and the pixel electrode 13C are influenced by the horizontal electric field from the pixel electrodes 13A and 13C. However, the direction of the horizontal electric field along which the liquid crystal molecules are influenced thereby is the direction DL, which is the same direction as the rubbing direction of the alignment film 14A on the pixel electrode 13 side. Therefore, the 90°-twisted arrangement of the liquid crystal molecules is maintained even when the liquid crystal molecules 15a and 15b are aligned in the direction of the electric field. As a result, the light transmitted through the G filter 17B becomes almost uniform as shown in FIG. 4B and a decrease in light quantity of the transmitted light due to the influences by the adjacent sub-pixels is suppressed.

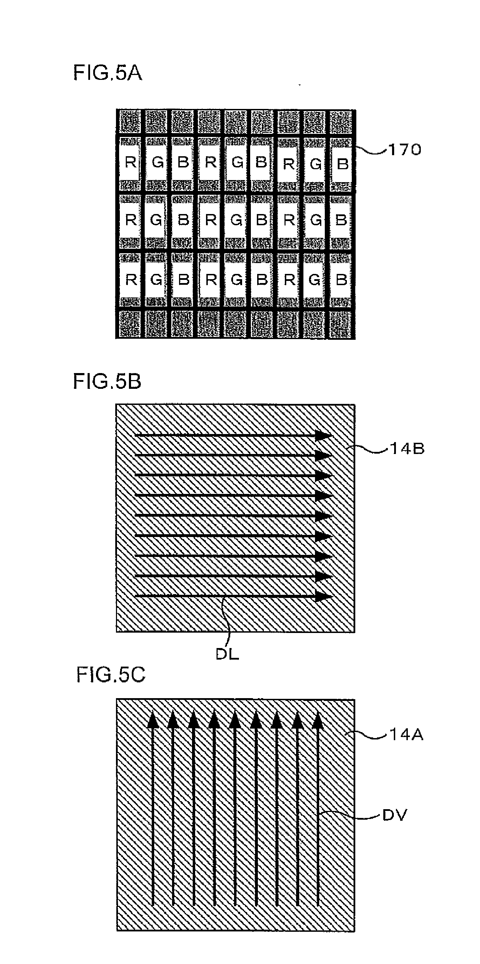

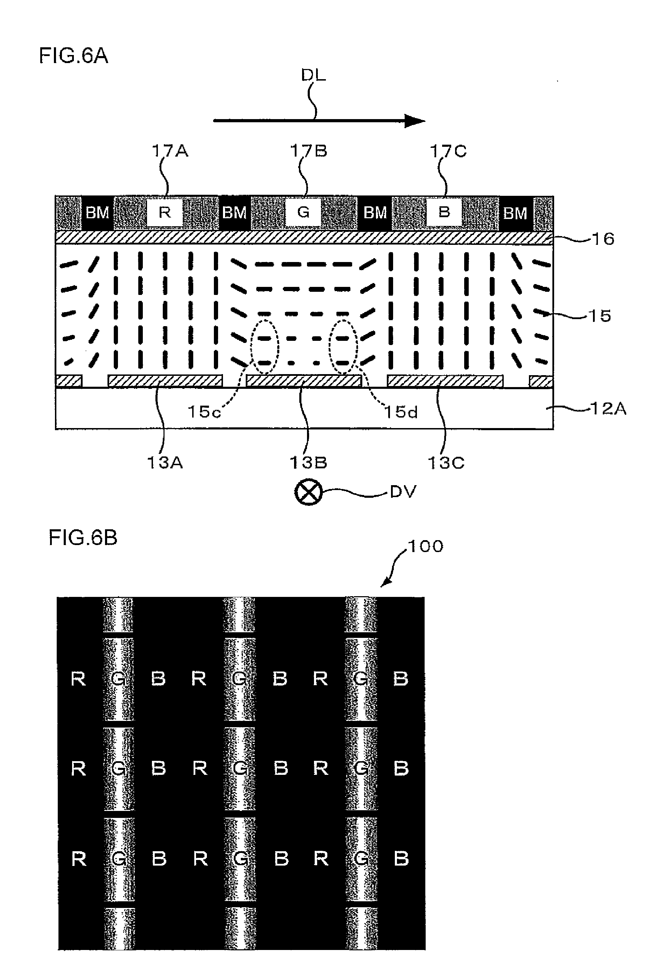

Referring to FIGS. 5 and 6, a comparative example of the liquid crystal panel 1 according to the first embodiment is explained. In a liquid crystal panel 100 in which a color filter 170 shown in FIG. 5A is formed, the rubbing direction of the alignment film 14B on the color filter 17 side is set to the shorter direction of the rectangular filter as indicated by the arrow DL shown in FIG. 5B. In the liquid crystal panel 100, the rubbing direction of the alignment film 14A on the pixel electrode 13 side is set to the longer direction of the rectangular filter as indicated by the arrow DV shown in FIG. 5C. As shown in FIG. 6A, among the liquid crystal molecules that are present between the G filter 17B and the pixel electrode 13B, there are the liquid crystal molecules 15a and 15b that are disposed close to the pixel electrode 13A and the pixel electrode 13C, which are aligned in the direction along the shorter direction DL of the rectangular filters as influenced by the horizontal electric field from the pixel electrodes 13A and 13C. This breaks up the 90°-twisted arrangement of the liquid crystal molecules, so that the oscillation direction of the light that is transmitted through the liquid crystal 15 is not rotated by 90°. As a result, as shown in FIG. 6B, portions of the light transmitted through the G filter 17B near the R filter 17A and the B filter 17C become darker than other portions.

According to the first embodiment as described above, the following advantageous effect can be obtained.

In the liquid crystal panel 1, in which rectangular pixels each provided with a rectangular filter are arranged in parallel horizontally and vertically, the rubbing direction of the alignment film 14B on the color filter 17 side is set to the longer direction of the rectangular pixels and the rubbing direction of the alignment film 14A on the pixel electrode 13 side is set to the shorter direction of the rectangular pixels. This makes it possible to prevent breaking up of the 90°-twisted arrangement of the liquid crystal molecules even when the pixel concerned is influenced by the electric fields of the pixel electrodes corresponding to the adjacent rectangular pixels.

### -SECOND EMBODIMENT-

Next, the liquid crystal panel according to the second embodiment of the present invention will be explained. The liquid crystal panel according to the second embodiment of the present invention differs from the liquid crystal panel 1 according to the first embodiment in the structure of the common electrode. The other structures are the same as those in the first embodiment. Accordingly, explanation is focused mainly on the common electrode.

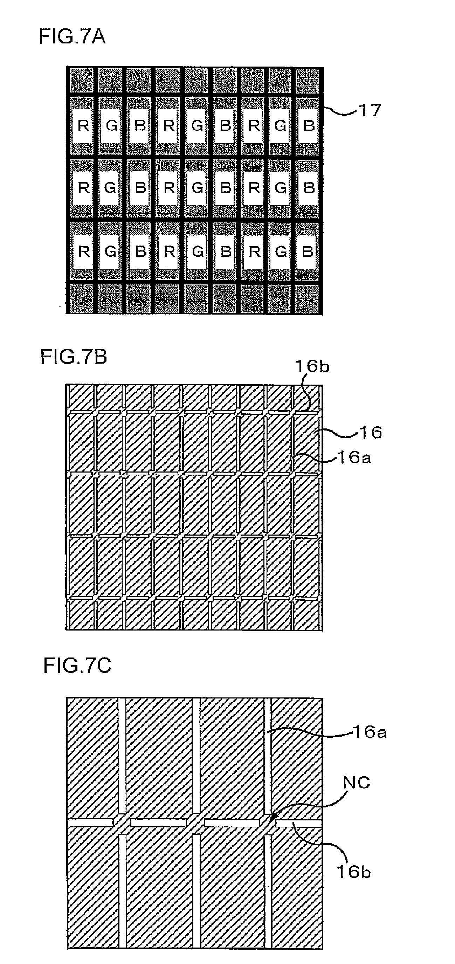

Referring to FIGS. 7 to 9, a common electrode 16 according to the second embodiment is explained. Explanation hereafter is made assuming that similarly to the first embodiment, only the G filter 17B transmits light from the backlight 2 but the R filter 17A and the B filter 17C do not transmit the light.

As shown in FIG. 7A, also the liquid crystal panel 1A according to the second embodiment includes a color filter 17 in which rectangular filters are arranged in parallel horizontally and vertically. In the liquid crystal panel 1A, the common electrode 16 is formed of slits 16a and 16b in a part of the longer side and in a part of the shorter side of the rectangular filter as shown in FIG. 7B. On this occasion, areas each surrounded by slit-like non-conductive parts (hereafter, referred to as "slits") 16a and 16b and adjacent to each other are made conductive to each other. To this end, the slits 16a and 16b are configured to be discontinuous near the corners of the rectangular filters as shown in FIG. 7C. That is, slit-non-continuous parts NC are provided near the corners of the rectangular filters. Such slits 16a and 16b can be formed by forming the common electrode 16 with masking the slit-non-continuous part NC using a resist.

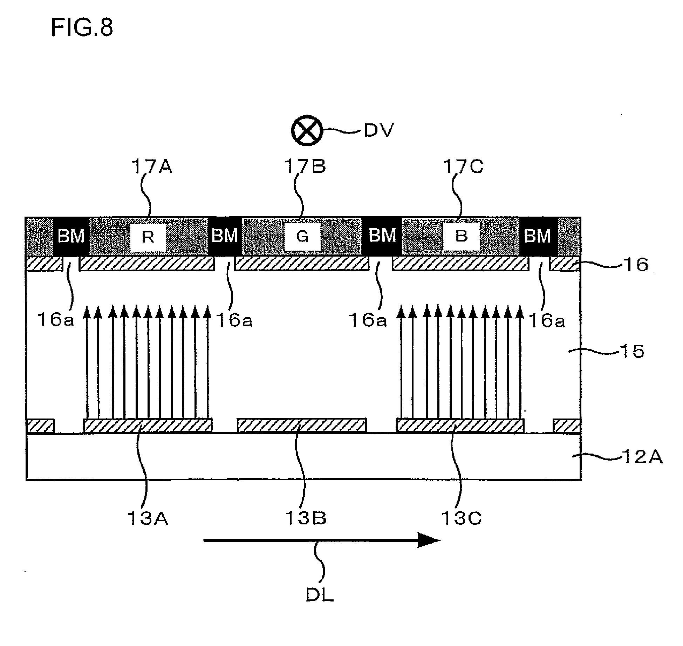

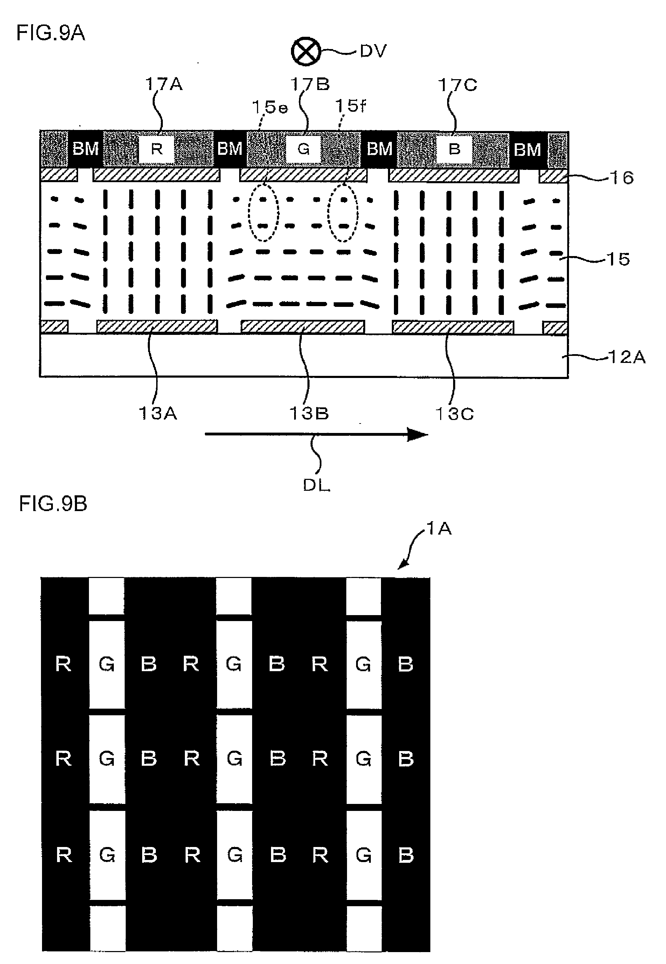

As shown in FIG. 8, the slits 16a and 16b prevent the electric field directed toward the common electrode 16 from the pixel electrodes 13A and 13C from extending toward the G filter 17B. As a result, among the liquid crystal molecules on the color filter 17 side between the G filter 17B and the pixel electrode 13B and the color filter 17, the liquid crystal molecules 15e and 15f on the R filter 17A side and the B filter 17C side, respectively, can be prevented frombeing influenced by the electric field directed toward the common electrode 16 from the pixel electrodes 13A and 13C as shown in FIG. 9A. As a result, as shown in FIG. 9B, the light that is transmitted through the G filter 17B becomes substantially uniform, so that a reduction in light quantity of the transmitted light due to influences by the adjacent sub-pixels is controlled.

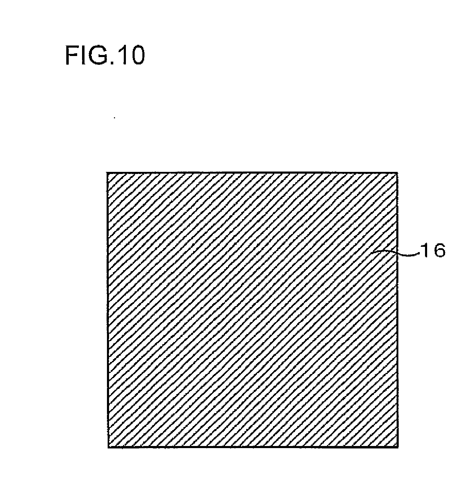

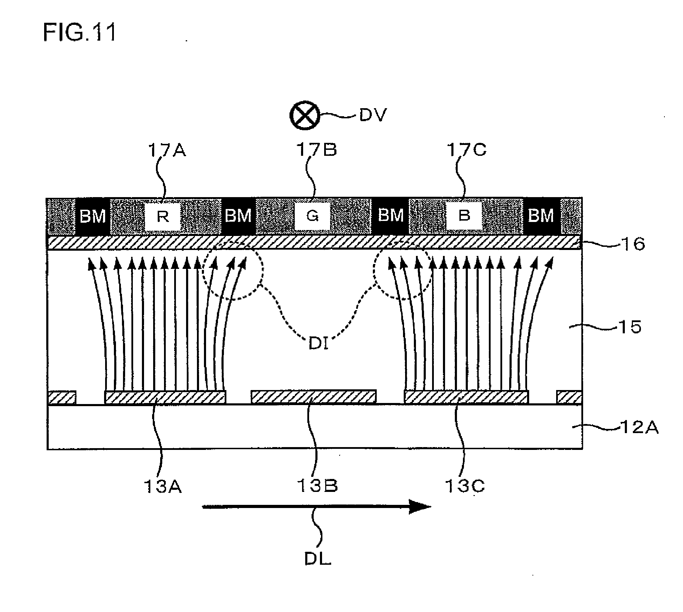

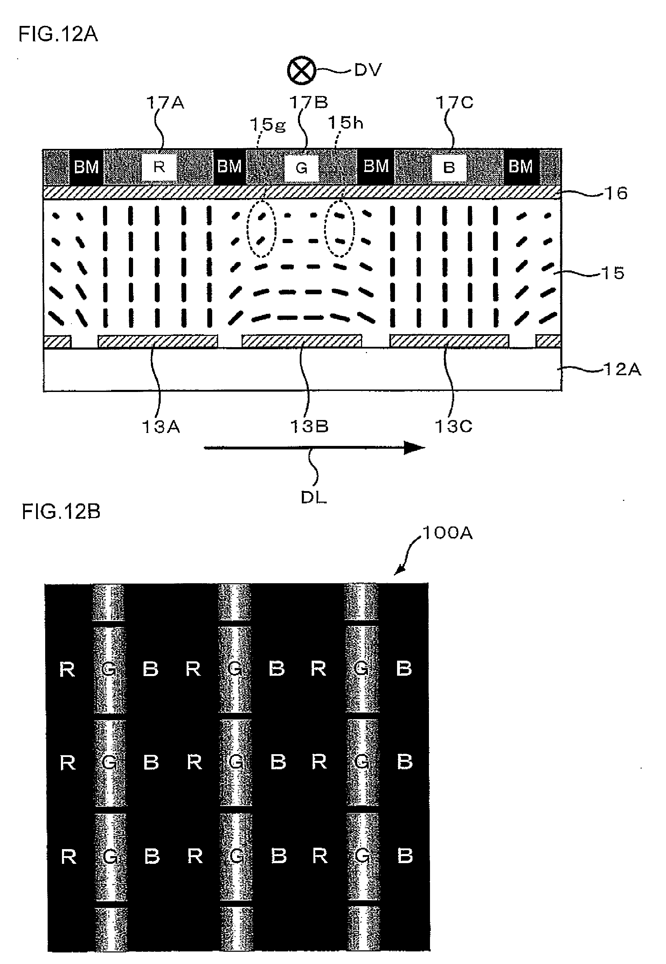

Referring to FIGS. 10 and 11, a comparative example of the liquid crystal panel 1A according to the second embodiment is explained. As shown in FIG. 10, a liquid crystal panel 100A according to this comparative example includes the common electrode 16 that is free of slits. Since the slits 16a and 16b are not formed in the common electrode 16, there is generated an inclined electric field DI extending in the direction of the G filter 17B in the electric field toward the common electrode 16 from the pixel electrodes 13A and 13C as shown in FIG. 11. As shown in FIG. 12A, among the liquid crystal molecules on the color filter 17 side that are present between the G filter 17B and the pixel electrode 13B, there are the liquid crystal molecules 15g and 15h on the R filter 17A side and the B filter 17C side, respectively, whose orientations are aligned in the direction of the electric field. Therefore, the 90°-twisted arrangement of the liquid crystal molecules is broken up. Thus, the oscillation direction of the light that is transmitted through the liquid crystal 15 is not rotated by 90°. As a result, as shown in FIG. 12B, portions of the light that is transmitted through the G filter 17B near the R filter 17A and near the B filter 17C become darker than other parts.

According to the second embodiment as mentioned above, the following advantageous effects can be obtained.
(1) In the liquid crystal panel 1, in which rectangular pixels each provided with a rectangular filter (hereafter, referred to as "rectangular pixels") are arranged in parallel horizontally and vertically, the common electrode 16 is formed of slits 16a and 16b in a part of the longer side and in a part of the shorter side of the rectangular filter. This can control the influence of the electric field from the pixel electrodes corresponding to adjacent pixels and prevent the breakingup of the 90°-twisted arrangement of the liquid crystal molecules.
(2) The conductivity of the common electrode 16 is endowed between the sub-pixels such that the slits 16a and 16b are non-continuous near the corners of the rectangular pixels. This can prevent long loop current from occurring in the common electrode 16 and also prevent turbulence of electric field applied to the liquid crystal 15 from occurring.

### -MODIFICATIONS-

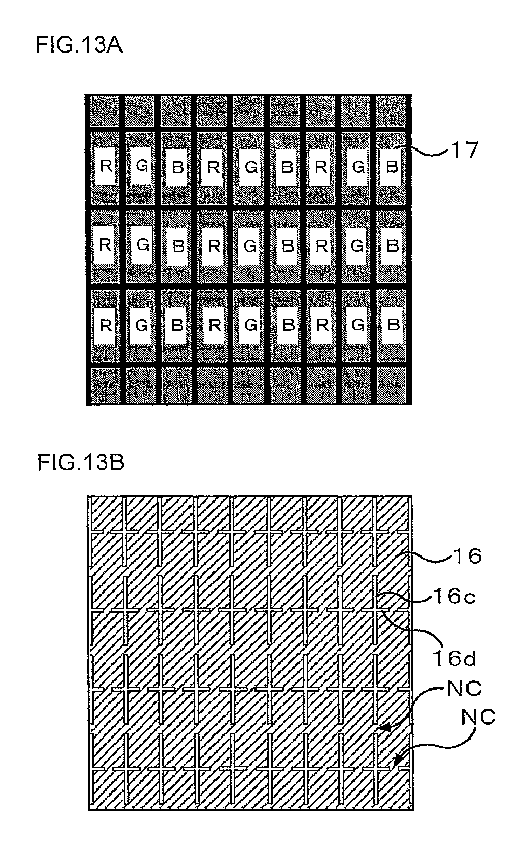

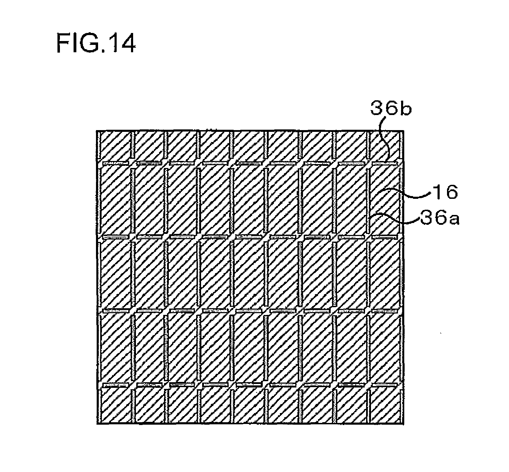

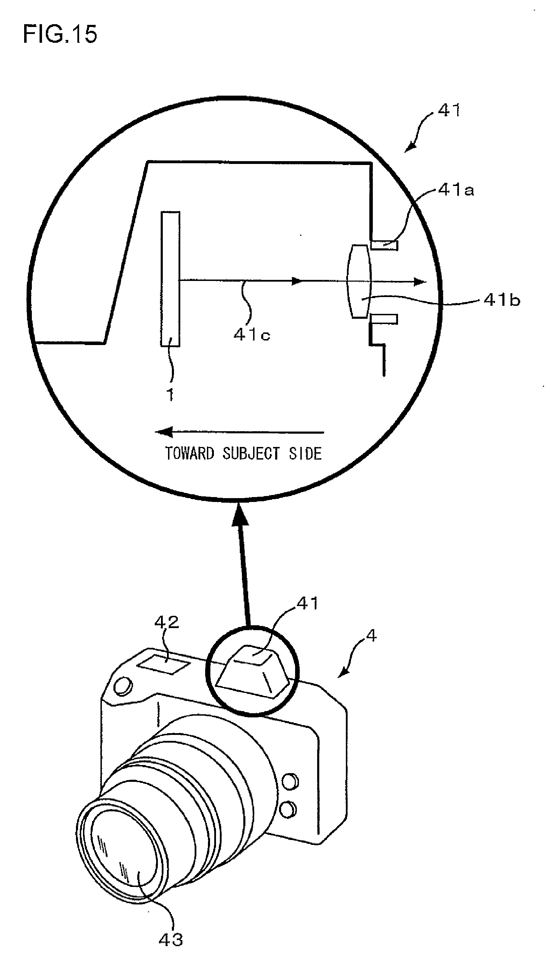

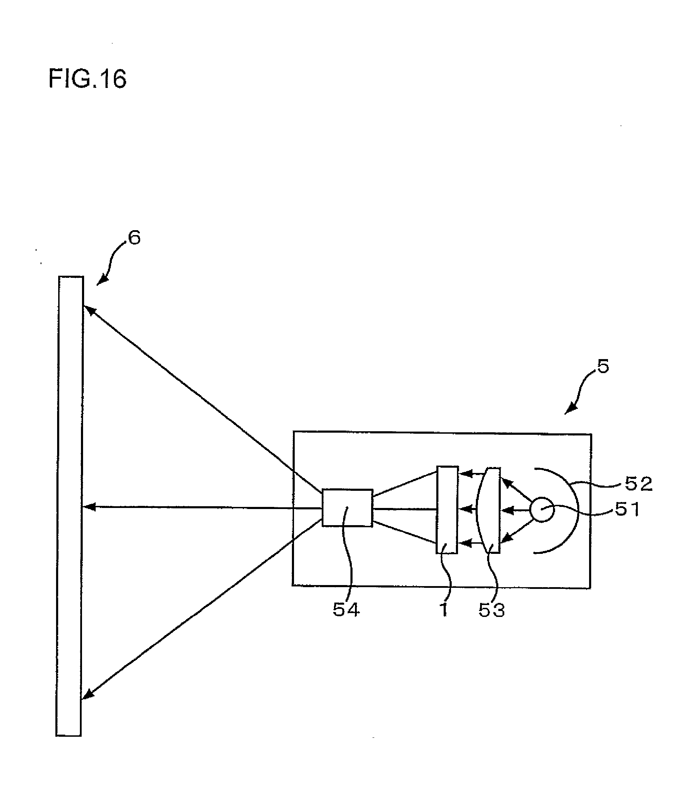

The above-mentioned embodiments may be modified as follows.
(1) In the second embodiment, the common electrode 16 is formed of the slit 16a along a part of the longer side, and of the slit 16b along a part of the shorter side of the rectangular pigment. However, the slit to be formed in the common electrode 16 is not limited to those in the second embodiment as far as it is formed along a part of at least the longer side of the rectangular pixel. Among influences given on one rectangular pixel by adj acent rectangular pixels, the influence given by the pixel that is adj acent in the shorter direction of the rectangular pixel concerned is the greatest. Therefore, if a slit is formed along a part of at least the longer side of the rectangular pixel, the influence from the rectangular pixel that is adjacent in the shorter direction of the rectangular pixel can be controlled. Since the slit is formed along a part of the longer side of the rectangular pixel, the common electrodes 16 of the rectangular pixels that are adj acent in the shorter direction of the rectangular pixel concerned become conductive to each other, so that occurrence of a loop current that causes turbulence of the electric field in the liquid crystal 15 can be prevented.
(2) In the second embodiment, non-continuous parts NC are provided near the corners of the rectangular pixels. However, the non-continuous parts NC of slits 16c and 16d may be provided at intermediate parts of the longer and shorter sides of the rectangular pixels as shown in FIGS. 13A and 13B. On this occasion, the slit 16c formed along the longer side of the rectangular pixel and the slit 16d formed along the shorter side of the rectangular pixel are combined to form a cross-shaped slit as shown in FIG. 13B.
(3) In the second embodiment, the slits 16a and 16b are formed in the common electrode 16. However, the present invention is not limited to the second embodiment, as far as the influence of the electric field generated by the charged pixel electrode 13 on those liquid crystal molecules, which are some of the liquid crystal molecules from among the liquid crystal molecules corresponding to the pixel electrodes adjacent to the pixel electrode 13 and which are arranged on the common electrode 16 side, is controlled. For example, instead of forming the slits 16a and 16b, transparent insulation layers 36a and 36b may be formed on the surface of the common electrode 16 on the pixel electrode 13 side at the same positions as those of the slits 16a and 16b as shown in FIG. 14. With this construction, the extension of the electric field of the pixel electrode of the rectangular pixel toward the rectangular filter of the adj acent rectangular pixel can be prevented. The transparent insulation layers 36a and 36b are formed, for example, by attaching a transparent seal onto the common electrode 16.
(4) While the liquid crystal panes 1 and 1A according to the above-mentioned embodiments are transmissive liquid crystal panes, a reflective liquid crystal panel may also be used. The principle of display of the liquid crystal panels 1 and 1A according to the above-mentioned embodiments is a TN method. However, the present invention is not limited to the principle of display used in the embodiments. For example, a STN (Super Twisted Nematic) method may be used. The driving method of the liquid crystal panels 1 and 1A according to the above-mentioned embodiments is an active matrix method using TFT. However, the present invention is not limited to the driving method used in the embodiments as far as it is an active matrix method. For example, an active matrix method using a MIM (Metal Insulated Metal) may also be used.
(5) The treatment that maintains the direction in which the liquid crystal molecules are aligned is not limited to the rubbing treatment used in the above-mentioned embodiments. It may be, for example, an inclined deposition method by which silicon oxide is deposited on a glass substrate.
(6) In the above-mentioned embodiments, the liquid crystal panel 1 in which the axes of polarization of the polarization plates 11A and 11B are mutually orthogonal (normal white type) is used. However, the present invention may also be applied to a liquid crystal panel in which the directions of the axes of polarization of the polarization plates 11A and 11B are aligned (normal black type).
(7) The liquid crystal panels 1 and 1A according to the above-mentioned embodiments are preferably used in particular in a compact-size display device. This is because in a progress in miniaturization of liquid crystal panel 1 at high resolution, sub-pixels are also miniaturized and the influence of the electric field by adj acent sub-pixels increases. For example, the liquid crystal panel 1 of the present invention can be used in a liquid crystal viewfinder provided in a finder unit 41 of a camera 4 as shown in FIG. 15. As shown in cross-section in FIG. 15, the finder unit 41 includes an eye piece 41a, an eye lens 41b, and the liquid crystal panel 1. As indicated by an arrow 41c, the user can view the display of the liquid crystal panel 1 through the eye lens 41b. A subject image captured through a photographic lens is displayed on the liquid crystal panel 1 and the user can be in visual contact with the subject by looking through the eye piece 41a in the finder 41. Since the liquid crystal panel 1 is disposed in the finder unit 41, it must be small in size. Therefore, the influence of the electric field due to the adjacent sub-pixels increases, the present invention is suitable as a liquid crystal panel of a liquid crystal viewfinder.
   As shown in FIG. 15, it is preferred that the liquid crystal panel of the present invention is used in a top surface display device 42 provided on the top surface of the camera 4 . This is because the top surface display device 42 is attached to the top surface of the camera 1 so that the liquid crystal panel 1 must be miniaturized and hence it is preferred that display is performed at high resolutions. Therefore, since the influence of the electric field due to the adjacent sub-pixels increases, the present invention is suitable for a liquid crystal panel in the top surface display device 42.
(8) It is preferred that the liquid crystal panel 1 according to the above-mentioned embodiment is used in a portable projector. This is because the liquid crystal panel is required to exhibit a high resolution and be of a small size. Referring to FIG. 16, a projector 5 equipped with the liquid crystal panel 1 according to one embodiment of the present invention will be explained. The projector 5 includes a light source 51, a reflector 52, a condenser lens 53, the liquid crystal panel 1, and a projector lens 54. Light irradiated from the light source 51 is condensed by the condenser lens 53. The light condensed by the condenser lens 53 is converted into light perpendicular to the incident plane of the liquid crystal panel 1 and having a uniform luminance. The light transmitted through the liquid crystal panel 1 is transmitted through the projector lens 54 and projected on a projection plane 6. In addition, since the liquid crystal panel used in a head-up display is also required to exhibit a high resolution and be of a small size, the liquid crystal panel of the present invention can be applied to the head-up display.

It is possible to combine the embodiment with one or more of modifications. It is also possible to combine one or more of the modifications in any fashion. For example, it may be configured such that the rubbing direction of the alignment film 14A on the pixel electrode 13 side is set to the shorter direction of the rectangular filter and the common electrode 16 is formed of the slits 16a and 16b.

The above described embodiments are examples and various modifications can be made without departing from the scope of the invention.

## Claims

1. A liquid crystal panel including a plurality of rectangular pixels in parallel, the liquid crystal panel comprising:
a liquid crystal containing liquid crystal molecules;
a color filter that transmits a light having a predetermined color from among lights that have been transmitted through the liquid crystal;
a plurality of pixel electrodes that applies electric fields to the liquid crystal;
a common electrode opposite to the plurality of the pixel electrodes through the liquid crystal;
a first rubbing means for aligning the liquid crystal molecules in a first direction at an interface of the liquid crystal on the side of the pixel electrode; and
a second rubbing means for aligning the liquid crystal molecules in a second direction at an interface of the liquid crystal on the side of the common electrode, wherein
the first direction is a shorter direction of the rectangular pixel.

2. A liquid crystal panel according to claim 1, wherein
the common electrode includes an electric field control means for controlling an influence of an electric field generated by a first pixel electrode having accumulated charges therein among the pixel electrodes on the liquid crystal molecules arranged on the side of the common electrode among the liquid crystal molecules corresponding to a second pixel electrode adjacent to the first pixel electrode.

3. A liquid crystal panel including a plurality of rectangular pixels arranged in parallel therein, the liquid crystal panel comprising:
a liquid crystal containing liquid crystal molecules;
a color filter that transmits a light having a predetermined color from among lights transmitted through the liquid crystal;
a plurality of pixel electrodes each of which applies an electric field to the liquid crystal; and
a common electrode facing the plurality of pixel electrodes via the liquid crystal, wherein
the common electrode includes an electric field control means for controlling an influence of an electric field generated by a first pixel electrode having accumulated charges therein from among the pixel electrodes on the liquid crystal molecules arranged on the side of the common electrode among the liquid crystal molecules corresponding to a second pixel electrode adjacent to the first pixel electrode.

4. A liquid crystal panel according to claim 2 or claim 3, wherein
the electric field control means is constituted by a slit-like non-conductive part formed on the common electrode along a part of a longer side of the rectangular pixel.

5. A liquid crystal panel according to claim 2 or claim 3, wherein
the electric field control means includes a transparent insulation layer formed on the common electrode along a part of a longer side of the rectangular pixel.

6. A display device comprising a liquid crystal panel according to any one of claims 1 through 5.

7. Aprojector comprising a liquid crystal panel according to any one of claims 1 through 5.
